# EUROPEAN PATENT APPLICATION

(11) **EP 2 977 574 A1**
(43) Date of publication of application: **27.01.2016**
(21) Application number: 14770535.4
(22) Date of filing: 12.02.2014
(51) Int. Cl.: F01N 3/023, F01N 3/00, F01N 3/18

(54) **FILTER ABNORMALITY DETECTING DEVICE**

(30) Priority: 22.03.2013 JP 2013059941
(71) Applicant: TOYOTA JIDOSHA KABUSHIKI KAISHA, Toyota-shi, Aichi-ken, 471-8571 (JP)
(72) Inventor: KIDOKORO, Toru, Toyota-shi Aichi 471-8571 (JP); HAGIMOTO, Taiga, Toyota-shi Aichi 471-8571 (JP); TAKAOKA, Kazuya, Toyota-shi Aichi 471-8571 (JP); NISHIJIMA, Hirokazu, Toyota-shi Aichi 471-8571 (JP); MATSUMOTO, Arifumi, Toyota-shi Aichi 471-8571 (JP); FURUI, Kenji, Toyota-shi Aichi 471-8571 (JP); TERUI, Yuki, Toyota-shi Aichi 471-8571 (JP); UOZUMI, Akifumi, Toyota-shi Aichi 471-8571 (JP)
(74) Representative: Smith, Samuel Leonard
(86) International application number: PCT/JP2014/053187
(87) International publication number: WO 2014/148150

(57) **Abstract**

A filter abnormality detection apparatus including a filter which is provided in an exhaust passage of an internal combustion engine and which collects particulate matter in exhaust gas, and a PM sensor which detects an amount of particulate matter in the exhaust gas on a downstream side of the filter. The filter abnormality detection apparatus includes a PM sensor regenerating unit which performs a PM sensor regeneration process that is a process of removing particulate matter from the PM sensor when the amount of particulate matter deposited on the PM sensor equals or exceeds a prescribed amount, and a determining unit which determines that the filter is abnormal when a difference between an interval at which the PM sensor regeneration process is performed and a reference interval is equal to or larger than a threshold.

## Description

### [TECHNICAL FIELD]

The present invention relates to a filter abnormality detection apparatus.

### [BACKGROUND ART]

An internal combustion engine may be equipped with a filter which is provided in an exhaust passage of the internal combustion engine and which collects particulate matter (hereinafter, also referred to as "(PM") in exhaust gas, and a PM sensor which detects PM in the exhaust gas in the exhaust passage on a downstream side of the filter. The PM sensor is a sensor which outputs an electric signal corresponding to an amount of PM that is deposited on the PM sensor itself. Therefore, when the amount of PM that is deposited on the PM sensor reaches a prescribed value, PM sensor regeneration that is a process of removing PM from the PM sensor is performed. In addition, a technique is known for determining an abnormality of a filter when the number of regenerations of a PM sensor in a prescribed period exceeds a threshold (for example, refer to Patent Document 1).

However, when an operating state in which PM deposited on the filter is oxidized due to NO₂ in exhaust gas continues, since an amount of PM that flows downstream decreases even if the filter is abnormal, the number of regenerations of the PM sensor may decrease. Therefore, determining an abnormality of the filter based solely on the number of regenerations of the PM sensor may result in a decline in determination accuracy. In addition, while an abnormality of the filter can also be determined based on a differential pressure between an upstream side and a downstream side of the filter, since the differential pressure changes according to an amount of PM deposited on the filter, determination accuracy may decline. Furthermore, when determining an abnormality of the filter based on a detection value of a PM sensor on a downstream side of the filter, since an amount of PM deposited on the PM sensor must be accurately obtained, an influence of a variation in the detection value of the PM sensor increases. Therefore, when the detection value of the PM sensor varies, determination accuracy of an abnormality of the filter may decline.

### [PRIOR ART REFERENCES]

### [PATENT DOCUMENTS]

Patent Document 1: Japanese Patent Application Laid-open No. 2012-062804
Patent Document 2: Japanese Patent Application Laid-open No. 2007-315275
Patent Document 3: Japanese Patent Application Laid-open No. 2012-087666

### [SUMMARY OF THE INVENTION]

### [PROBLEMS TO BE SOLVED BY THE INVENTION]

The present invention has been made in consideration of the problems described above and an object thereof is to increase determination accuracy when determining an abnormality of a filter using a PM sensor.

### [MEANS FOR SOLVING THE PROBLEMS]

In order to achieve the object described above, the present invention provides
a filter abnormality detection apparatus including:
a filter which is provided in an exhaust passage of an internal combustion engine and which collects particulate matter in exhaust gas; and
a PM sensor which detects an amount of particulate matter in the exhaust gas on a downstream side of the filter,
the filter abnormality detection apparatus further including:
   a PM sensor regenerating unit which performs a PM sensor regeneration process that is a process of removing particulate matter from the PM sensor when the amount of particulate matter deposited on the PM sensor equals or exceeds a prescribed amount; and
   a determining unit which determines that the filter is abnormal when a difference between an interval at which the PM sensor regeneration process is performed and a reference interval that is a reference of the interval at which the PM sensor regeneration process is performed is equal to or larger than a threshold.

When an abnormality such as cracking and chipping occurs in the filter, an amount of PM that passes through the filter changes according to a PM deposition amount on the filter. In other words, since resistance at locations where an abnormality such as cracking and chipping has not occurred relatively increases as the PM deposition amount on the filter increases, a larger amount of exhaust gas flows into locations where an abnormality has occurred. Therefore, a larger amount of PM flows out from the locations where an abnormality has occurred. On the other hand, when the filter is normal, the amount of PM that passes through the filter hardly changes even though the PM deposition amount on the filter changes.

Meanwhile, the PM sensor produces an output in accordance with an amount of PM deposited on the PM sensor itself. When the amount of PM deposited on the PM sensor becomes excessively large, it becomes difficult to produce an output in accordance with the PM amount. Therefore, when the amount of PM deposited on the PM sensor equals or exceeds the prescribed amount, PM is removed from the PM sensor by the PM sensor regeneration process. In this case, the prescribed amount is a PM deposition amount that necessitates the PM sensor regeneration process.

When the filter is normal, the amount of PM flowing out from the filter is approximately constant regardless of the PM deposition amount on the filter, and therefore a period until the PM deposition amount on the PM sensor reaches a prescribed amount is approximately constant. On the other hand, when the filter is abnormal, since the amount of PM flowing out from the filter changes according to the PM deposition amount on the filter, a period until the PM deposition amount on the PM sensor reaches the prescribed amount changes according to the PM deposition amount on the filter.

Therefore, when comparison of an interval of the PM sensor regeneration process with a reference interval reveals that the interval of the PM sensor regeneration process has changed, a determination can be made that the filter is abnormal.

Moreover, for example, a precedingly measured interval of the PM sensor regeneration process may be adopted as the reference interval. Alternatively, an interval of the PM sensor regeneration process when the filter is within a range where the filter can be considered to be normal may be adopted as the reference interval. In addition, the above-mentioned difference when the filter is abnormal can be adopted as the threshold. Alternatively, time or a travel distance may be adopted as the threshold.

In the present invention, the determining unit may twice measure an interval at which the PM sensor regeneration process is performed, adopt one of the intervals as the reference interval, and determine that the filter is abnormal when a difference between the other interval and the reference interval is equal to or larger than the threshold.

In this case, respective intervals obtained when the internal combustion engine is in different operating states may be used or respective intervals obtained when different amounts of PM flow into the filter may be used. Alternatively, respective intervals obtained when PM deposition amounts on the filter differ may be used. In addition, the two PM sensor regeneration processes need not be consecutive. For example, a currently measured interval and a previously measured interval are compared with each other. When the filter is normal, the intervals are approximately the same even when the operating states of the internal combustion engine differ, even in operating states with different amounts of PM flowing into the filter, and even when PM deposition amounts on the filter differ. Therefore, the previously obtained interval can be used as the reference interval. As described above, a determination that the filter is abnormal can be made based on intervals at which the PM sensor regeneration process is performed as obtained under different conditions.

In the present invention, in a case where an amount of NO₂ in exhaust gas flowing into the filter is larger than a prescribed amount, the determining unit can determine that the filter is abnormal when a value obtained by subtracting, from the reference interval, an interval at which the PM sensor regeneration process is performed is equal to or smaller than a threshold that is a negative value.

The prescribed amount in this case can be a NO₂ amount that causes the PM deposition amount on the filter to decrease. Moreover, the NO₂ amount may be an amount per unit time or an amount over a prescribed period. In addition, a NO₂ concentration may be used in place of a NO₂ amount. When NO₂ flows into the filter, PM deposited on the filter is oxidized. Therefore, the PM deposition amount on the filter may decrease. When the filter is normal, the interval at which the PM sensor regeneration process is performed does not change even when the PM deposition amount on the filter decreases. On the other hand, when the filter is abnormal, the interval at which the PM sensor regeneration process is performed increases when the PM deposition amount on the filter decreases. Therefore, when the filter is abnormal, a value obtained by subtracting, from the reference interval, an interval at which the PM sensor regeneration process is performed is a negative value. The smaller the value (the larger an absolute value), the larger the change in the amount of PM flowing out from the filter. Therefore by setting the threshold to a negative value and comparing the threshold and the difference with each other, a determination can be made on whether or not the filter is abnormal.

In the present invention, the determining unit may adopt a precedingly measured interval at which the PM sensor regeneration process is performed, as the reference interval.

In other words, a preceding value and a current value of the interval at which the PM sensor regeneration process is performed are compared with each other. When the filter is normal, since the interval at which the PM sensor regeneration process is performed hardly changes, the preceding value and the current value of the interval at which the PM sensor regeneration process is performed are approximately the same. Therefore, a difference between the preceding value and the current value of the interval at which the PM sensor regeneration process is performed is small. On the other hand, when the filter is abnormal, since the interval at which the PM sensor regeneration process is performed changes, there is a difference between the preceding value and the current value of the interval at which the PM sensor regeneration process is performed. Therefore, a determination that the filter is abnormal can be made if the absolute value of the difference is equal to or larger than a threshold. Moreover, the preceding measurement may be a measurement performed during a preceding operation of the internal combustion engine.

In the present invention, the determining unit may adopt an interval at which the PM sensor regeneration process is performed when the filter is normal, as the reference interval.

In other words, when the filter is normal, the interval at which the PM sensor regeneration process is performed hardly changes. Therefore, by obtaining an interval when the filter is normal in advance, a determination of an abnormality of the filter can be made by comparing the interval when the filter is normal and an obtained interval with each other.

In addition, in the present invention, the determining unit may adopt a period from a time point when the PM sensor regeneration process is completed to a time point when a next PM sensor regeneration process is started, as the interval at which the PM sensor regeneration process is performed.

Furthermore, in the present invention, the determining unit may adopt a period from a time point when the PM sensor regeneration process is started to a time point when a next PM sensor regeneration process is started, as the interval at which the PM sensor regeneration process is performed.

Moreover, in the present invention, the determining unit may adopt a period from a time point when the PM sensor regeneration process is completed to a time point when a next PM sensor regeneration process is completed, as the interval at which the PM sensor regeneration process is performed.

All of the intervals at which the PM sensor regeneration process is performed obtained as described above are approximately constant when the filter is normal and change when the filter is abnormal. Therefore, an abnormality determination of the filter can be performed using these intervals.

### [EFFECT OF THE INVENTION]

According to the present invention, determination accuracy when determining an abnormality of a filter using a PM sensor can be improved.

### [BRIEF DESCRIPTION OF THE DRAWINGS]

FIG. 1 is a diagram showing a schematic configuration of an internal combustion engine according to an embodiment.
FIG. 2 is a diagram showing a relationship between a deposition amount of PM on a filter and a ratio of PM passing through the filter to PM flowing into the filter (PM pass-through rate).
FIG. 3 is a time chart showing transitions of a vehicle speed and a PM deposition amount on a filter, a detection value of a PM sensor when the filter is normal, and a detection value of a PM sensor when the filter is abnormal according to a first embodiment.
FIG. 4 is a diagram showing a relationship of an amount of change in a regeneration interval between a case where a filter is normal and a case where the filter is abnormal according to the first embodiment.
FIG. 5 is a flow chart showing a flow of abnormality detection of a filter according to the first embodiment.
FIG. 6 is a time chart showing transitions of a vehicle speed and a PM deposition amount on a filter, a detection value of a PM sensor when the filter is normal, and a detection value of a PM sensor when the filter is abnormal according to a second embodiment.
FIG. 7 is a diagram showing a relationship of an amount of change in a regeneration interval between a case where a filter is normal and a case where the filter is abnormal according to the second embodiment.
FIG. 8 is a flow chart showing a flow of abnormality detection of a filter according to the second embodiment.
FIG. 9 is a flow chart showing a flow of abnormality detection of a filter according to a third embodiment.
FIG. 10 is a time chart showing transitions of a vehicle speed and a PM deposition amount on a filter, a detection value of a PM sensor when the filter is normal, and a detection value of a PM sensor when the filter is abnormal according to a fourth embodiment;
FIG. 11 is a diagram showing a relationship of an amount of change in a regeneration interval between a case where a filter is normal and a case where the filter is abnormal according to the fourth embodiment.
FIG. 12 is a flow chart showing a flow of abnormality detection of a filter according to the fourth embodiment.
FIG. 13 is a time chart showing transitions of a vehicle speed and a PM deposition amount on a filter, a detection value of a PM sensor when the filter is normal, and a detection value of a PM sensor when the filter is abnormal according to a fifth embodiment;
FIG. 14 is a diagram showing a relationship of an amount of change in a regeneration interval between a case where a filter is normal and a case where the filter is abnormal according to the fifth embodiment.
FIG. 15 is a flow chart showing a flow of abnormality detection of a filter according to the fifth embodiment.
FIG. 16 is a flow chart showing a flow of abnormality detection of a filter according to a sixth embodiment.

### [MODES FOR CARRYING OUT THE INVENTION]

Hereinafter, modes for implementing the invention will be described in detail by way of example of embodiments with reference to the drawings. However, it is to be understood that dimensions, materials, shapes, relative arrangements, and the like of components described in the embodiments are not intended to limit the scope of the invention thereto unless otherwise noted.

### <First embodiment>

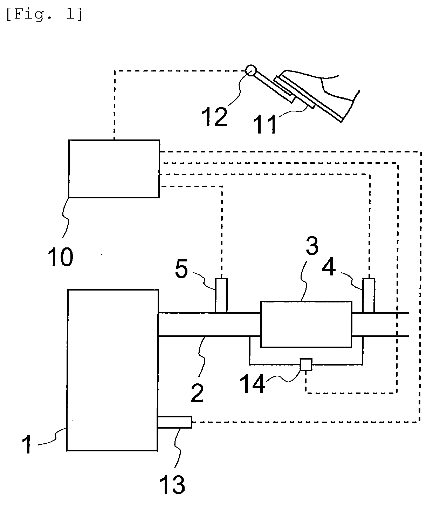

FIG. 1 is a diagram showing a schematic configuration of an internal combustion engine according to an embodiment. While an internal combustion engine 1 according to the present embodiment is a gasoline engine, a diesel engine may be used instead. An exhaust passage 2 is connected to the internal combustion engine 1. A filter 3 that collects particulate matter (PM) in exhaust gas is provided in the exhaust passage 2.

A PM sensor 4 that detects an amount of PM in exhaust gas flowing out from the filter 3 is provided in the exhaust passage 2 on a downstream side of the filter 3. The PM sensor 4 has a pair of electrodes and uses the fact that resistance between the electrodes changes in accordance with an amount of PM attached (deposited) between the electrodes to output a signal in accordance with the PM amount. Based on the signal, an amount of PM that passes through the filter 3 per unit time can be detected. Alternatively, an amount of PM that passes through the filter 3 in a prescribed period may be detected. A temperature sensor 5 that measures temperature of exhaust gas flowing into the filter 3 is provided in the exhaust passage 2 on an upstream side of the filter 3.

In addition, a differential pressure sensor 14 that detects a difference between pressure inside the exhaust passage 2 on an upstream side of the filter 3 and pressure inside the exhaust passage 2 on a downstream side of the filter 3 is provided in the exhaust passage 2. According to the differential pressure sensor 14, a pressure difference between the upstream side and the downstream side of the filter 3 (hereinafter, also referred to as filter differential pressure) can be detected.

The internal combustion engine 1 configured as described above is provided with an ECU 10 that is an electronic control unit for controlling the internal combustion engine 1. In addition to the sensors described above, an accelerator depression amount sensor 12 which outputs an electric signal in accordance with an amount of depression of an accelerator pedal 11 by a driver and which detects an engine load and a crank position sensor 13 which detects an engine rotational speed are connected to the ECU 10 via an electric wiring, and output signals of the various sensors are to be input to the ECU 10.

In addition, the ECU 10 controls the internal combustion engine 1 based on input detection values of the respective sensors. For example, based on an output signal of the PM sensor 4, the ECU 10 calculates an amount of PM that flows out from the filter 3 per unit time. A relationship between the output signal of the PM sensor 4 and the amount of PM that flows out from the filter 3 may be mapped in advance. In addition, in the present embodiment, abnormality detection of the filter 3 is performed based on the output signal of the PM sensor 4.

When an abnormality such as cracking and chipping occurs in the filter 3, since PM passes through a portion where the cracking or chipping has occurred, an amount of PM that flows out to a downstream side of the filter 3 increases. Therefore, an amount of PM per unit time that is detected on the downstream side of the filter 3 increases. In other words, the detection value of the PM sensor 4 changes depending on a state of the filter 3.

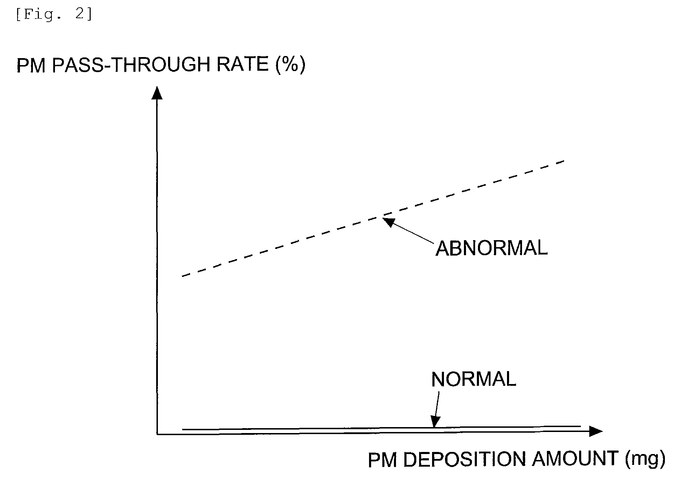

FIG. 2 is a diagram showing a relationship between a deposition amount of PM on the filter 3 and a ratio of PM passing through the filter 3 to PM flowing into the filter 3 (PM pass-through rate). A solid line indicates a case where the filter 3 is normal and a dashed line indicates a case where the filter 3 is abnormal. When the filter 3 is normal, the PM pass-through rate is approximately constant at a relatively low value regardless of the PM deposition amount on the filter 3. On the other hand, when the filter 3 is abnormal, the PM pass-through rate increases as the PM deposition amount on the filter 3 increases. When an abnormality such as cracking occurs in the filter 3, PM passes through the cracked location. Subsequently, as the PM deposition amount increases, since more exhaust gas passes through the cracked location that has lower resistance, the amount of PM passing through the filter 3 increases.

Therefore, when the filter 3 is abnormal, a PM deposition amount per unit time (hereinafter, also referred to as a PM deposition rate) on the PM sensor 4 increases. When the PM deposition amount on the PM sensor 4 equals or exceeds a prescribed amount, a PM sensor regeneration process that is a process of removing PM from the PM sensor 4 is performed. The PM sensor regeneration process is performed by raising the temperature of the PM sensor 4 to a temperature where PM is oxidized. The prescribed amount in this case is determined so as to maintain accuracy of a detection value of the PM sensor within an allowable range.

In addition, when the filter 3 is abnormal, since the PM pass-through rate increases as the PM deposition amount on the filter 3 increases as shown in FIG. 2, the PM deposition rate on the PM sensor 4 may increase with time. Therefore, when the filter 3 is abnormal, a frequency of performing the PM sensor regeneration process may gradually increase. On the other hand, when the filter 3 is normal, since the PM pass-through rate hardly changes, the PM deposition rate on the PM sensor 4 also remains approximately constant. Therefore, when the filter 3 is normal, the frequency of performing the PM sensor regeneration process is constant.

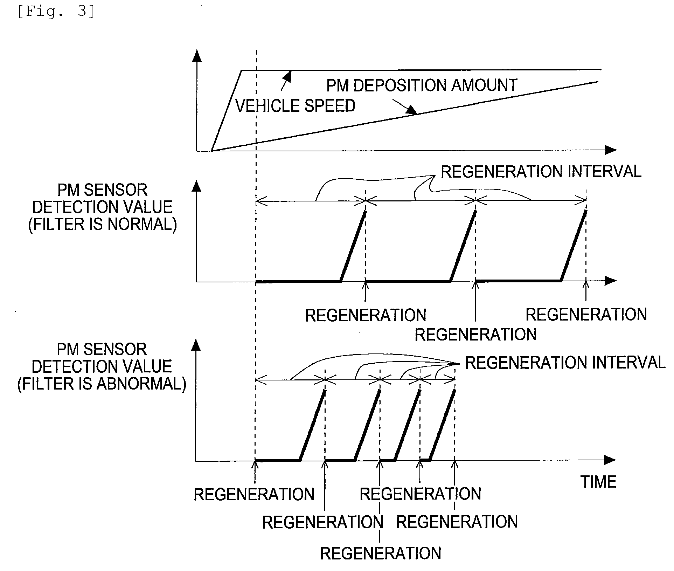

FIG. 3 is a time chart showing transitions of a vehicle speed and a PM deposition amount on the filter 3, a detection value of the PM sensor 4 when the filter 3 is normal, and a detection value of the PM sensor 4 when the filter 3 is normal according to the present embodiment. The vehicle speed becomes constant once a certain speed is reached. In addition, the PM deposition amount on the filter 3 increases due to PM discharged from the internal combustion engine 1. A PM sensor regeneration process is performed at a time point denoted as "regeneration".

When the detection value of the PM sensor 4 reaches or exceeds a threshold, the PM sensor regeneration process is performed and the detection value of the PM sensor 4 is restored to 0. Moreover, the detection value does not increase until a certain amount of PM is deposited on the PM sensor 4 because a current does not flow between the pair of electrodes of the PM sensor. In other words, the detection value starts to increase only after a certain amount of PM is deposited on the PM sensor 4 and a current starts to flow between the pair of electrodes of the PM sensor 4. Subsequently, the detection value increases in accordance with the amount of PM in exhaust gas. In addition, after start of the internal combustion engine 1, a PM sensor regeneration process for removing PM deposited on the PM sensor 4 during a previous operation of the internal combustion engine 1 is performed once. Moreover, in the present embodiment, the ECU 10 that performs a PM sensor regeneration process corresponds to the PM sensor regenerating unit according to the present invention.

Therefore, when the filter 3 is abnormal, a period from completion of a previous PM sensor regeneration process to a start of increase of a detection value of the PM sensor 4 is shorter than when the filter 3 is normal. In addition, when the filter 3 is abnormal, the larger the PM deposition amount on the filter 3, the shorter the period from completion of a previous PM sensor regeneration process to a start of increase of a detection value of the PM sensor 4. Furthermore, when the filter 3 is abnormal, a period from start of increase of the detection value of the PM sensor 4 to the detection value reaching a threshold is shorter than when the filter 3 is normal.

According to the above, while an interval at which the PM sensor regeneration process is performed is approximately constant when the filter 3 is normal, the interval at which the PM sensor regeneration process is performed gradually decreases when the filter 3 is abnormal.

Therefore, a determination that the filter 3 is abnormal can be made if the interval at which the PM sensor regeneration process is performed decreases. A period from a time point of completion of a PM sensor regeneration process to a time point of start of a next PM sensor regeneration process may be adopted as the interval. Alternatively, time or a travel distance may be used instead of the period. Alternatively, a period from a time point of start of a PM sensor regeneration process to a time point of start of a next PM sensor regeneration process may be adopted as the period. Alternatively, a period from a time point of completion of a PM sensor regeneration process to a time point of completion of a next PM sensor regeneration process may be adopted as the period.

For example, when comparison of an interval at which the PM sensor regeneration process is performed with a reference interval reveals that the interval at which the PM sensor regeneration process is performed has changed, a determination can be made that the filter 3 is abnormal. Hereinafter, an interval at which the PM sensor regeneration process is performed will be referred to as a regeneration interval.

Moreover, for example, a precedingly obtained regeneration interval may be adopted as the reference interval. Alternatively, a regeneration interval when the filter 3 is within a range where the filter 3 can be considered to be normal may be adopted as the reference interval. The reference interval in this case is to be obtained in advance by an experiment, a simulation, or the like and stored in the ECU 10. In addition, the reference interval is not limited to a precedingly obtained regeneration interval and a regeneration interval obtained before that may be adopted instead. In this case, regeneration intervals obtained when the internal combustion engine 1 is in different operating states may be used or regeneration intervals obtained when different amounts of PM flow into the filter 3 may be used. Furthermore, the PM deposition amount on the filter 3 may differ. When the filter 3 is normal, the regeneration intervals are approximately the same even when the operating states of the internal combustion engine 1 differ, even in operating states with different amounts of PM flowing into the filter 3, and even when PM deposition amounts on the filter 3 differ. Therefore, the precedingly obtained regeneration interval can be used as the reference interval.

In addition, in the present embodiment, a regeneration interval is obtained each time a PM sensor regeneration process is performed and a preceding regeneration interval and a current regeneration interval are compared with each other. When an amount of decrease of the regeneration interval is smaller than a threshold, a determination is made that the filter 3 is normal, and when an amount of decrease of the regeneration interval is equal to or larger than the threshold, a determination is made that the filter 3 is abnormal. The threshold is obtained in advance by an experiment, a simulation, or the like and stored in the ECU 10 as a lower limit value of an amount of decrease of the regeneration interval when the filter 3 is abnormal.

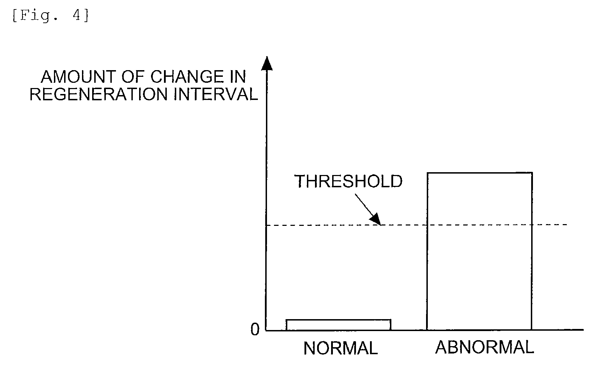

FIG. 4 is a diagram showing a relationship of an amount of change in a regeneration interval between a case where the filter 3 is normal and a case where the filter 3 is abnormal according to the present embodiment. A value obtained by subtracting a current regeneration interval from a preceding regeneration interval is adopted as an amount of change in the regeneration interval. When the filter 3 is normal, the amount of change in the regeneration interval is near 0. However, when the filter 3 is abnormal, the amount of change in the regeneration interval is equal to or larger than the threshold.

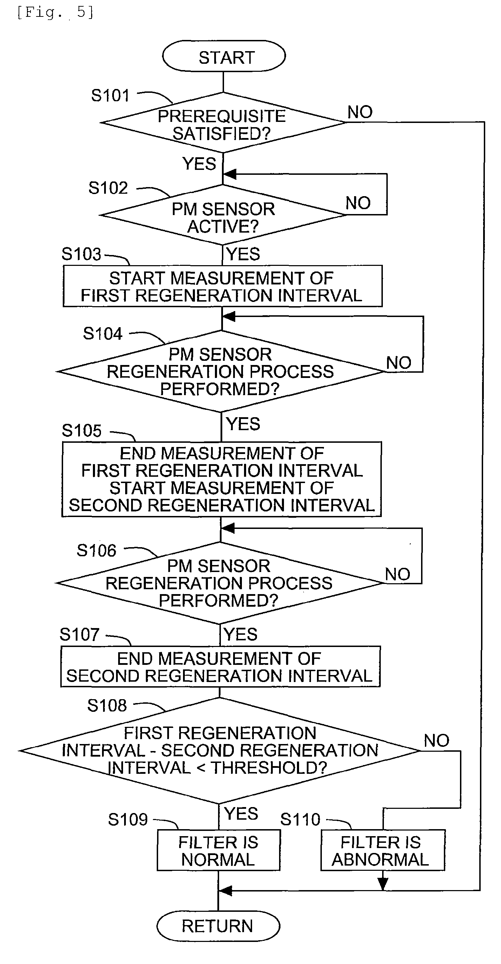

FIG. 5 is a flow chart showing a flow of abnormality detection of the filter 3 according to the present embodiment. The present routine is executed every prescribed time by the ECU 10.

In step S101, a determination is made on whether or not a prerequisite for performing an abnormality detection of the filter 3 is satisfied. For example, a determination is made on whether or not the PM sensor 4 is normal. Whether or not the PM sensor 4 is normal can be determined using known techniques. When a positive determination is made in step S101, the present routine advances to step S102, and when a negative determination is made, the present routine is ended.

In step S102, a determination is made on whether or not the PM sensor 4 is active. In the present step, a determination is made on whether or not a temperature of the PM sensor 4 is a temperature suitable for PM detection. This determination can be made using known techniques. In the present step, a determination may be made on whether or not the PM sensor regeneration process has been completed and the temperature of the PM sensor 4 has fallen to a temperature that enables PM to be detected. When a positive determination is made in step S102, the present routine advances to step S103, and when a negative determination is made, step S102 is executed once again.

In step S103, a measurement of a regeneration interval is started. The regeneration interval measured in the present step will be referred to as a first regeneration interval.

In step S104, a determination is made on whether or not a PM sensor regeneration process has been performed. In the present step, a determination is made on whether or not a time point of an end of the first regeneration interval has arrived. When a positive determination is made in step S104, the present routine advances to step S105, and when a negative determination is made, step S104 is executed once again.

In step S105, the measurement of the first regeneration interval is ended and a measurement of a next regeneration interval is started. Moreover, a next regeneration interval that is measured in the present step will be referred to as a second regeneration interval.

In step S106, a determination is made on whether or not a PM sensor regeneration process has been performed. In the present step, a determination is made on whether or not a time point of an end of the second regeneration interval has arrived. When a positive determination is made in step S106, the present routine advances to step S107, and when a negative determination is made, step S106 is executed once again.

In step S107, the measurement of the second regeneration interval is ended.

In step S108, a determination is made on whether or not a value obtained by subtracting the second regeneration interval from the first regeneration interval is smaller than a threshold. The threshold is obtained in advance by an experiment, a simulation, or the like and stored in the ECU 10 as a lower limit value of a value obtained by subtracting the second regeneration interval from the first regeneration interval when the filter 3 is abnormal. In the present step, a determination is made on whether or not an amount of change in the regeneration interval is smaller than a threshold.

When a positive determination is made in step S108, the present routine proceeds to step S109 and a determination is made that the filter 3 is normal. On the other hand, when a negative determination is made in step S108, the present routine proceeds to step S110 and a determination is made that the filter 3 is abnormal. Moreover, in the present embodiment, the ECU 10 that processes step S108 and subsequent steps corresponds to the determining unit according to the present invention.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced.

### <Second embodiment>

In the present embodiment, an abnormality of the filter 3 is detected based on an amount of change in the regeneration interval in a case where PM deposited on the filter 3 is oxidized by NO₂ or the like. Since other devices and the like are the same as those of the first embodiment, a description thereof will be omitted.

PM deposited on the filter 3 is oxidized and removed depending on a state of exhaust gas. For example, when the temperature of the filter 3 is somewhat high, PM is oxidized by NO₂ in exhaust gas flowing into the filter 3. Even in such a case, if the filter 3 is normal, the regeneration interval is approximately constant because the amount of PM passing through the filter 3 hardly changes. On the other hand, if the filter 3 is abnormal, since the amount of PM passing through the filter 3 decreases due to a decrease in the PM deposition amount on the filter 3, the regeneration interval increases.

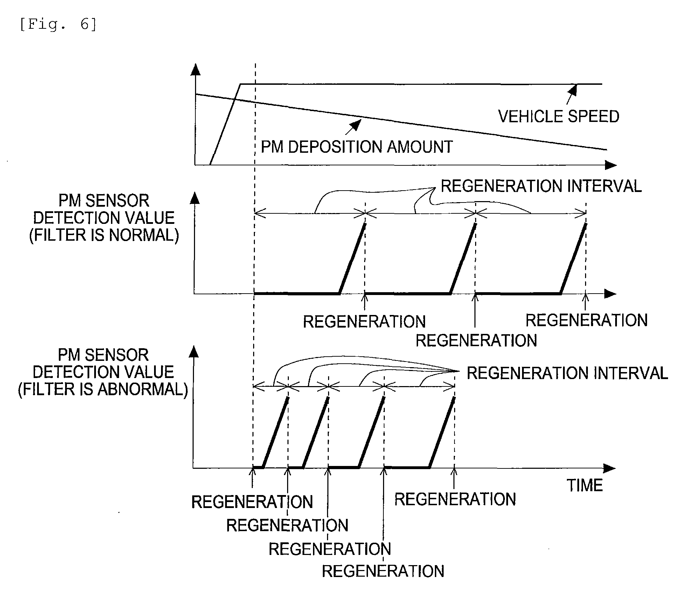

FIG. 6 is a time chart showing transitions of a vehicle speed and a PM deposition amount on the filter 3, a detection value of the PM sensor 4 when the filter 3 is normal, and a detection value of the PM sensor 4 when the filter 3 is abnormal according to the present embodiment. The vehicle speed becomes constant once a certain speed is reached. In addition, in the present embodiment, the PM deposition amount on the filter 3 decreases.

As shown, while an interval at which the PM sensor regeneration process is performed is approximately constant when the filter 3 is normal, the interval at which the PM sensor regeneration process is performed gradually increases when the filter 3 is abnormal. Therefore, a determination that the filter 3 is abnormal can be made when the regeneration interval has increased.

In addition, in the present embodiment, a regeneration interval is obtained every time a PM sensor regeneration process is performed. Furthermore, a difference between a preceding regeneration interval and a current regeneration interval is obtained. When the difference is larger than a threshold, a determination that the filter 3 is normal is made, and when the difference is equal to or smaller than the threshold, a determination that the filter 3 is abnormal is made. The threshold is obtained in advance by an experiment, a simulation, or the like and stored in the ECU 10 as an upper limit value of a difference between the preceding regeneration interval and the current regeneration interval when the filter 3 is abnormal. Moreover, the threshold according to the present embodiment takes a negative value. In addition, a regeneration interval when the filter 3 is within a range where the filter 3 can be considered to be normal and the current regeneration interval may be compared with each other in a similar manner to the first embodiment. Alternatively, instead of the regeneration interval obtained precedingly, a regeneration interval obtained before that and the current regeneration interval may be compared with each other.

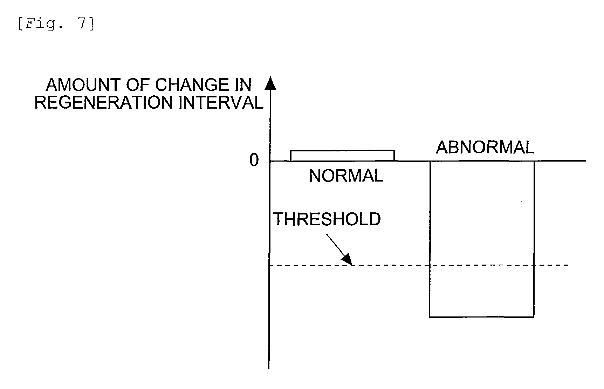

FIG. 7 is a diagram showing a relationship of an amount of change in a regeneration interval between a case where the filter 3 is normal and a case where the filter 3 is abnormal according to the present embodiment. A value obtained by subtracting a current regeneration interval from a preceding regeneration interval is adopted as an amount of change in the regeneration interval. When the filter 3 is normal, the amount of change in the regeneration interval is near 0. However, when the filter 3 is abnormal, the amount of change in the regeneration interval is equal to or smaller than the threshold.

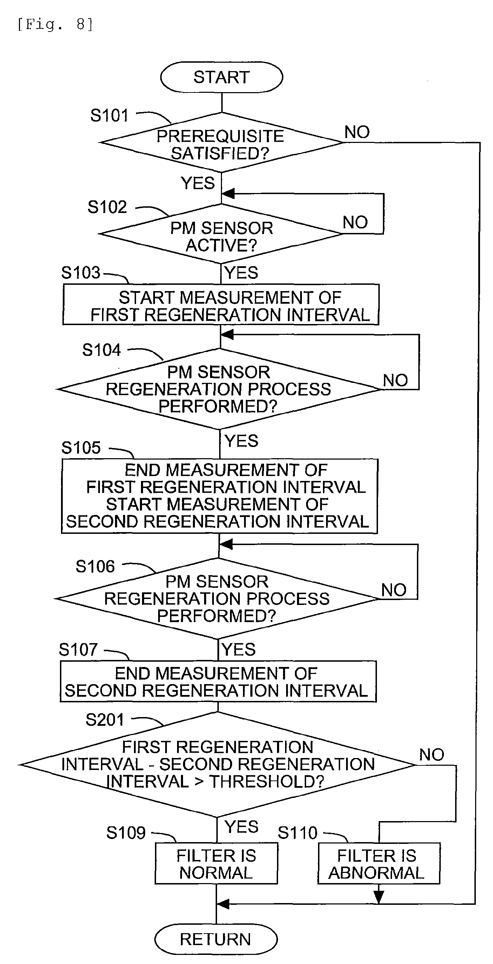

FIG. 8 is a flow chart showing a flow of abnormality detection of the filter 3 according to the present embodiment. The present routine is executed every prescribed time by the ECU 10. Moreover, steps in which same processes as those in the flow described earlier are performed will be denoted by same reference characters and a description thereof will be omitted. In addition, the present routine may be performed only when an amount of NO₂ in exhaust gas flowing into the filter is larger than a prescribed amount. In other words, the present routine may be executed only in a state where the PM deposition amount on the filter 3 decreases.

In the present embodiment, step S201 is processed after step S107 is processed. In step S201, a determination is made on whether or not a value obtained by subtracting the second regeneration interval from the first regeneration interval is larger than a threshold. This threshold is obtained in advance by an experiment, a simulation, or the like and stored in the ECU 10 as an upper limit value of a value obtained by subtracting the second regeneration interval from the first regeneration interval when the filter 3 is abnormal. Moreover, the threshold has a negative value. In the present step, a determination is made on whether or not an amount of change in the regeneration interval is larger than the threshold.

When a positive determination is made in step S201, the present routine proceeds to step S109 and a determination is made that the filter 3 is normal. On the other hand, when a negative determination is made in step S201, the present routine proceeds to step S110 and a determination is made that the filter 3 is abnormal. Moreover, in the present embodiment, the ECU 10 that processes step S201 and subsequent steps corresponds to the determining unit according to the present invention.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced. Furthermore, even when the PM deposition amount on the filter 3 decreases, an abnormality of the filter 3 can be determined with high accuracy.

### <Third embodiment>

In the present embodiment, the case described in the first embodiment and the case described in the second embodiment will be considered together. Since other devices and the like are the same as those of the first embodiment, a description thereof will be omitted.

Taking both the case described in the first embodiment and the case described in the second embodiment into consideration, when an absolute value of an amount of change in the regeneration interval is smaller than a threshold, the filter 3 is considered to be normal, and when the absolute value of an amount of change in the regeneration interval is equal to larger than the threshold, the filter 3 is considered to be abnormal. This threshold is obtained in advance by an experiment, a simulation, or the like and stored in the ECU 10 as a lower limit value of an absolute value of an amount of change of the regeneration interval when the filter 3 is abnormal.

In other words, when the filter 3 is normal, the regeneration interval is approximately constant regardless of an increase or decrease of the PM deposition amount. However, when the filter 3 is abnormal, the regeneration interval changes in accordance with an increase or decrease of the PM deposition amount. Therefore, a determination that the filter 3 is abnormal can be made when the regeneration interval has changed.

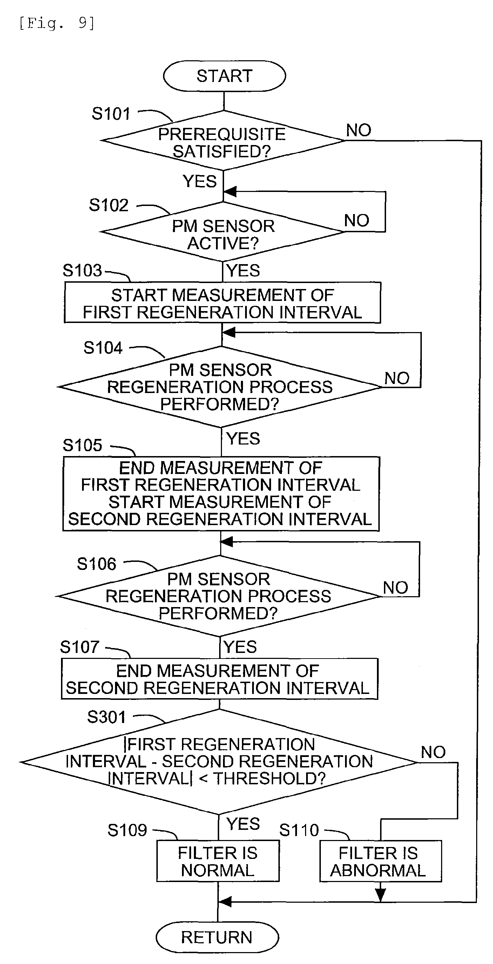

FIG. 9 is a flow chart showing a flow of abnormality detection of the filter 3 according to the present embodiment. The present routine is executed every prescribed time by the ECU 10. Moreover, steps in which same processes as those in the flow described earlier are performed will be denoted by same reference characters and a description thereof will be omitted.

In the present embodiment, step S301 is processed after step S107 is processed. In step S301, a determination is made on whether or not an absolute value of a value obtained by subtracting the second regeneration interval from the first regeneration interval is smaller than a threshold. The threshold is obtained in advance by an experiment, a simulation, or the like and stored in the ECU 10 as a lower limit value of an absolute value of a value obtained by subtracting the second regeneration interval from the first regeneration interval when the filter 3 is abnormal. Moreover, the threshold has a positive value. In the present step, a determination is made on whether or not an absolute value of an amount of change in the regeneration interval is larger than the threshold.

When a positive determination is made in step S301, the present routine proceeds to step S109 and a determination is made that the filter 3 is normal. On the other hand, when a negative determination is made in step S301, the present routine proceeds to step S110 and a determination is made that the filter 3 is abnormal. Moreover, in the present embodiment, the ECU 10 that processes step S301 and subsequent steps corresponds to the determining unit according to the present invention.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced. Furthermore, even when the PM deposition amount on the filter 3 decreases, an abnormality of the filter 3 can be determined with high accuracy. Moreover, in the present embodiment, an abnormality of the filter 3 can be determined regardless of an increase or decrease of the PM deposition amount on the filter 3.

### <Fourth embodiment>

In the first to third embodiments described above, an abnormality of the filter 3 cannot be detected unless at least two regeneration intervals are measured during one travel by a vehicle. Therefore, when the vehicle repetitively travels for a short period of time or when the vehicle repetitively travels short distances, there is a possibility that an abnormality detection of the filter 3 is not performed due to an insufficient number of PM sensor regeneration processes.

In comparison, in the present embodiment, an amount of change in the regeneration interval is obtained without being limited to one travel. Therefore, a preceding regeneration interval is stored in the ECU 10, and when a regeneration interval is next measured, the measured regeneration interval is compared with the stored preceding regeneration interval. Since other devices and the like are the same as those of the first embodiment, a description thereof will be omitted.

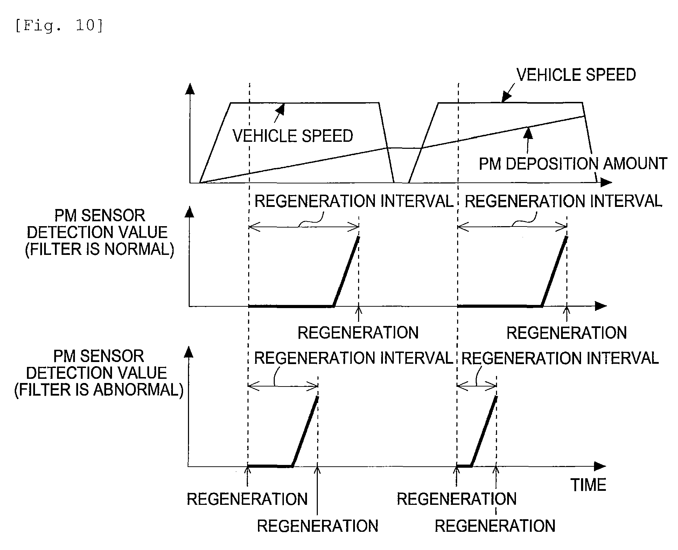

FIG. 10 is a time chart showing transitions of a vehicle speed and a PM deposition amount on the filter 3, a detection value of the PM sensor 4 when the filter 3 is normal, and a detection value of the PM sensor 4 when the filter 3 is abnormal according to the present embodiment. The vehicle speed has dropped to 0 along the way and the internal combustion engine is temporarily stopped. In addition, while the PM deposition amount on the filter 3 increases during an operation of the internal combustion engine 1, since PM is not discharged from the internal combustion engine 1 when the internal combustion engine 1 is stopped, the PM deposition amount on the filter 3 is constant.

While a PM sensor regeneration process is performed when the detection value of the PM sensor 4 equals or exceeds a threshold, since the PM sensor regeneration process is only performed once during a first travel, the regeneration interval is only measured once. In addition, a second PM sensor regeneration process is performed during a second travel.

Even in this case, when the filter 3 is abnormal, the regeneration interval is shorter than when the filter 3 is normal in a similar manner to the first embodiment. In addition, when the filter 3 is abnormal, the larger the PM deposition amount on the filter 3, the shorter the regeneration interval. Furthermore, when the filter 3 is abnormal, a period from start of increase of the detection value of the PM sensor 4 to the detection value reaching a threshold is shorter than when the filter 3 is normal.

According to the above, when the filter 3 is normal, an interval at which the PM sensor regeneration process is performed is approximately constant even if the internal combustion engine 1 is temporarily stopped. However, the interval at which the PM sensor regeneration process is performed gradually decreases when the filter 3 is abnormal.

Therefore, even if the internal combustion engine 1 is temporarily stopped, a determination that the filter 3 is abnormal can be made when the regeneration interval has decreased.

In addition, in the present embodiment, a regeneration interval is stored each time a PM sensor regeneration process is performed and a stored value of a preceding regeneration interval and a current regeneration interval are compared with each other. When an amount of decrease of the regeneration interval is smaller than a threshold, a determination is made that the filter 3 is normal, and when an amount of decrease of the regeneration interval is equal to or larger than the threshold, a determination is made that the filter 3 is abnormal. The threshold is obtained in advance by an experiment, a simulation, or the like and stored in the ECU 10 as a lower limit value of an amount of decrease of the regeneration interval when the filter 3 is abnormal. Alternatively, instead of a stored value of the preceding regeneration interval, a stored value of a regeneration interval obtained during a further prior operation of the internal combustion engine 1 and the current regeneration interval may be compared with each other.

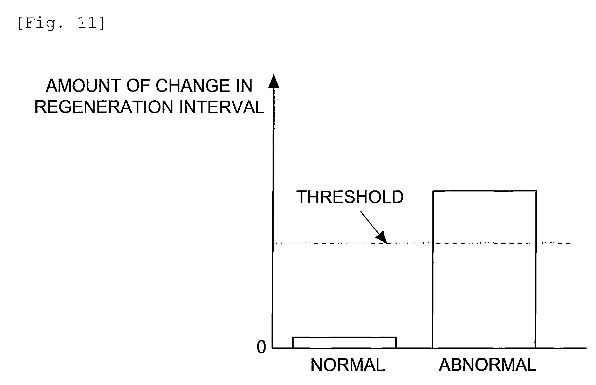

FIG. 11 is a diagram showing a relationship of an amount of change in a regeneration interval between a case where the filter 3 is normal and a case where the filter 3 is abnormal according to the present embodiment. A value obtained by subtracting a current regeneration interval from a preceding regeneration interval is adopted as an amount of change in the regeneration interval. When the filter 3 is normal, the amount of change in the regeneration interval is near 0. However, when the filter 3 is abnormal, the amount of change in the regeneration interval is equal to or larger than the threshold.

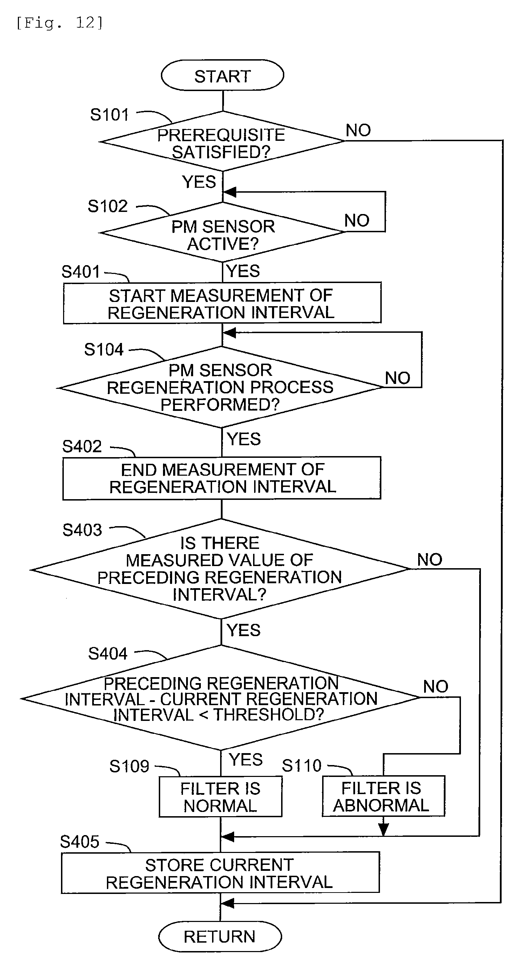

FIG. 12 is a flow chart showing a flow of abnormality detection of the filter 3 according to the present embodiment. The present routine is executed every prescribed time by the ECU 10. Moreover, steps in which same processes as those in the flow described earlier are performed will be denoted by same reference characters and a description thereof will be omitted.

In the present embodiment, when a positive determination is made in step S102, the present routine advances to step S401. In step S401, a measurement of a regeneration interval is started. Subsequently, the present routine advances to step S104, and when a positive determination is made in step S104, the present routine advances to step S402. In step S402, a measurement of a regeneration interval is ended.

Next, in step S403, a determination is made on whether or not a measured value of a preceding regeneration interval is stored in the ECU 10. In the present step, a determination is made on whether or not a regeneration interval is stored in a preceding routine in step S405 to be described later. When a positive determination is made in step S403, the present routine advances to step S404, and when a negative determination is made, the present routine advances to step S405.

In step S404, a determination is made on whether or not a value obtained by subtracting the currently measured regeneration interval from the previously stored regeneration interval is smaller than a threshold. The threshold is obtained in advance by an experiment, a simulation, or the like and stored in the ECU 10 as a lower limit value of a value obtained by subtracting the currently measured regeneration interval from the previously stored regeneration interval when the filter 3 is abnormal. In the present step, a determination is made on whether or not an amount of decrease in the regeneration interval is smaller than a threshold.

When a positive determination is made in step S404, the present routine proceeds to step S109 and a determination is made that the filter 3 is normal. On the other hand, when a negative determination is made in step S404, the present routine proceeds to step S110 and a determination is made that the filter 3 is abnormal. Moreover, in the present embodiment, the ECU 10 that processes step S404 and subsequent steps corresponds to the determining unit according to the present invention.

Subsequently, in step S405, the currently measured regeneration interval is stored in the ECU 10. The regeneration interval stored at this point is to be compared with a next regeneration interval.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced.

### <Fifth embodiment>

In the present embodiment, an amount of change in the regeneration interval is obtained without being limited to one travel in a similar manner to the fourth embodiment. Therefore, a preceding regeneration interval is stored in the ECU 10, and when a regeneration interval is next measured, the measured regeneration interval is compared with the stored preceding regeneration interval.

In addition, in the present embodiment, an abnormality of the filter 3 is detected based on an amount of change in the regeneration interval in a case where PM deposited on the filter 3 is oxidized by NO₂ or the like in a similar manner to the second embodiment. Since other devices and the like are the same as those of the first embodiment, a description thereof will be omitted.

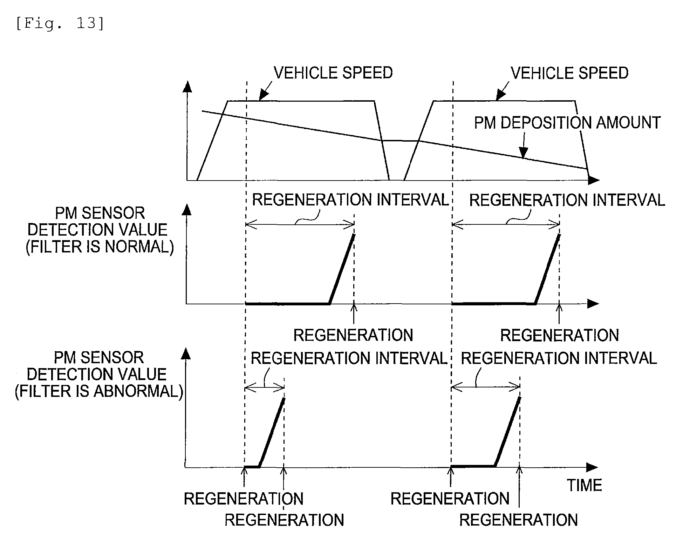

FIG. 13 is a time chart showing transitions of a vehicle speed and a PM deposition amount on the filter 3, a detection value of the PM sensor 4 when the filter 3 is normal, and a detection value of the PM sensor 4 when the filter 3 is abnormal according to the present embodiment. The vehicle speed has dropped to 0 along the way and the internal combustion engine is temporarily stopped. In addition, while the PM deposition amount on the filter 3 decreases during an operation of the internal combustion engine 1, since NO₂ is not discharged from the internal combustion engine 1 when the internal combustion engine 1 is stopped, the PM deposition amount on the filter 3 is constant.

While a PM sensor regeneration process is performed when the detection value of the PM sensor 4 equals or exceeds a threshold, since the PM sensor regeneration process is only performed once during a first travel, the regeneration interval is only measured once. In addition, a second PM sensor regeneration process is performed during a second travel.

Even in this case, when the filter 3 is abnormal, the regeneration interval is shorter than when the filter 3 is normal in a similar manner to the second embodiment. In addition, when the filter 3 is abnormal, the smaller the PM deposition amount on the filter 3, the longer the regeneration interval. Furthermore, when the filter 3 is abnormal, a period from start of increase of the detection value of the PM sensor 4 to the detection value reaching a threshold is shorter than when the filter 3 is normal.

According to the above, when the filter 3 is normal, an interval at which the PM sensor regeneration process is performed is approximately constant even if the internal combustion engine 1 is temporarily stopped. However, the interval at which the PM sensor regeneration process is performed gradually increases when the filter 3 is abnormal.

Therefore, even if the internal combustion engine 1 is temporarily stopped, a determination that the filter 3 is abnormal can be made when the regeneration interval has increased.

In addition, in the present embodiment, a regeneration interval is stored every time a PM sensor regeneration process is performed. Furthermore, a difference between a stored value of a preceding regeneration interval and a current regeneration interval is obtained. When the difference is larger than a threshold, a determination that the filter 3 is normal is made, and when the difference is equal to or smaller than the threshold, a determination that the filter 3 is abnormal is made. The threshold is obtained in advance by an experiment, a simulation, or the like and stored in the ECU 10 as an upper limit value of a difference between the stored value of the preceding regeneration interval and the current regeneration interval when the filter 3 is abnormal. Moreover, the threshold according to the present embodiment takes a negative value. Alternatively, instead of a stored value of the preceding regeneration interval, a stored value of a regeneration interval obtained during a further prior operation of the internal combustion engine 1 and the current regeneration interval may be compared with each other.

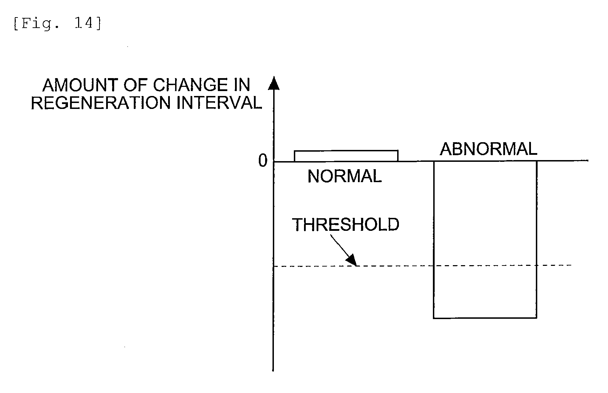

FIG. 14 is a diagram showing a relationship of an amount of change in a regeneration interval between a case where the filter 3 is normal and a case where the filter 3 is abnormal according to the present embodiment. A value obtained by subtracting a current regeneration interval from a preceding regeneration interval is adopted as an amount of change in the regeneration interval. When the filter 3 is normal, the amount of change in the regeneration interval is near 0. However, when the filter 3 is abnormal, the amount of change in the regeneration interval is equal to or smaller than the threshold.

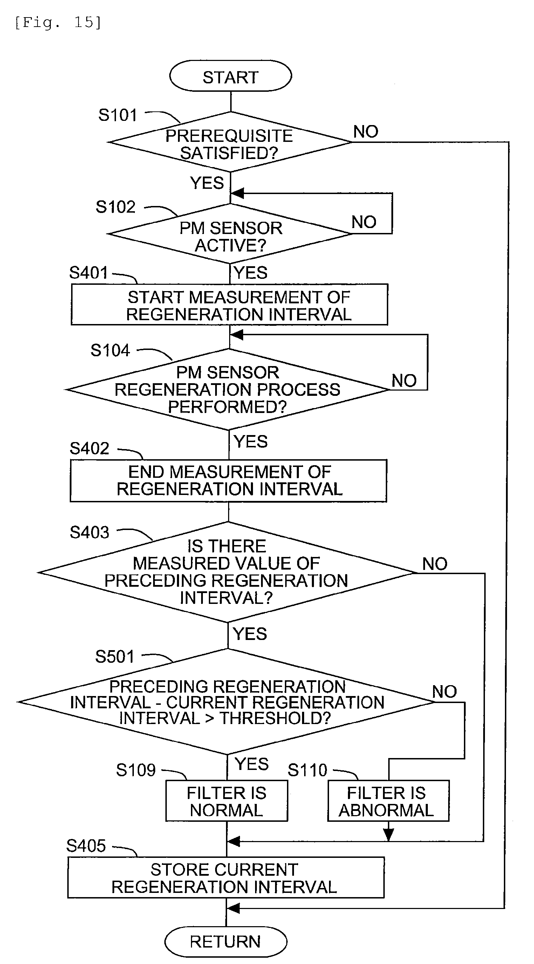

FIG. 15 is a flow chart showing a flow of abnormality detection of the filter 3 according to the present embodiment. The present routine is executed every prescribed time by the ECU 10. Moreover, steps in which same processes as those in the flow described earlier are performed will be denoted by same reference characters and a description thereof will be omitted. In addition, the present routine may be performed only when an amount of NO₂ in exhaust gas flowing into the filter is larger than a prescribed amount. In other words, the present routine may be executed only in a state where the PM deposition amount on the filter 3 decreases.

In the present embodiment, when a positive determination is made in step S403, the present routine advances to step S501. In step S501, a determination is made on whether or not a value obtained by subtracting the currently measured regeneration interval from the precedingly stored regeneration interval is larger than a threshold. The threshold is obtained in advance by an experiment, a simulation, or the like and stored in the ECU 10 as an upper limit value of a value obtained by subtracting the currently measured regeneration interval from the precedingly stored regeneration interval when the filter 3 is abnormal. Moreover, the threshold has a negative value. In the present step, a determination is made on whether or not an amount of change in the regeneration interval is larger than the threshold.

When a positive determination is made in step S501, the present routine proceeds to step S109 and a determination is made that the filter 3 is normal. On the other hand, when a negative determination is made in step S501, the present routine proceeds to step S110 and a determination is made that the filter 3 is abnormal. Moreover, in the present embodiment, the ECU 10 that processes step S501 and subsequent steps corresponds to the determining unit according to the present invention.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced. Furthermore, even when the PM deposition amount on the filter 3 decreases, an abnormality of the filter 3 can be determined with high accuracy.

### <Sixth embodiment>

In the present embodiment, the case described in the fourth embodiment and the case described in the fifth embodiment will be considered together. Since other devices and the like are the same as those of the first embodiment, a description thereof will be omitted.

Taking both the case described in the fourth embodiment and the case described in the fifth embodiment into consideration, even if an amount of change in the regeneration interval is obtained without being limited to one travel, when an absolute value of an amount of change in the regeneration interval is smaller than a threshold, the filter 3 is considered to be normal, and when the absolute value of an amount of change in the regeneration interval is equal to larger than the threshold, the filter 3 is considered to be abnormal. This threshold is obtained in advance by an experiment, a simulation, or the like and stored in the ECU 10 as a lower limit value of an absolute value of an amount of change of the regeneration interval when the filter 3 is abnormal.

In other words, even if an amount of change in the regeneration interval is obtained without being limited to one travel, when the filter 3 is normal, the regeneration interval is approximately constant regardless of an increase or decrease of the PM deposition amount, but when the filter 3 is abnormal, the regeneration interval changes in accordance with an increase or decrease of the PM deposition amount. Therefore, a determination that the filter 3 is abnormal can be made when the regeneration interval has changed.

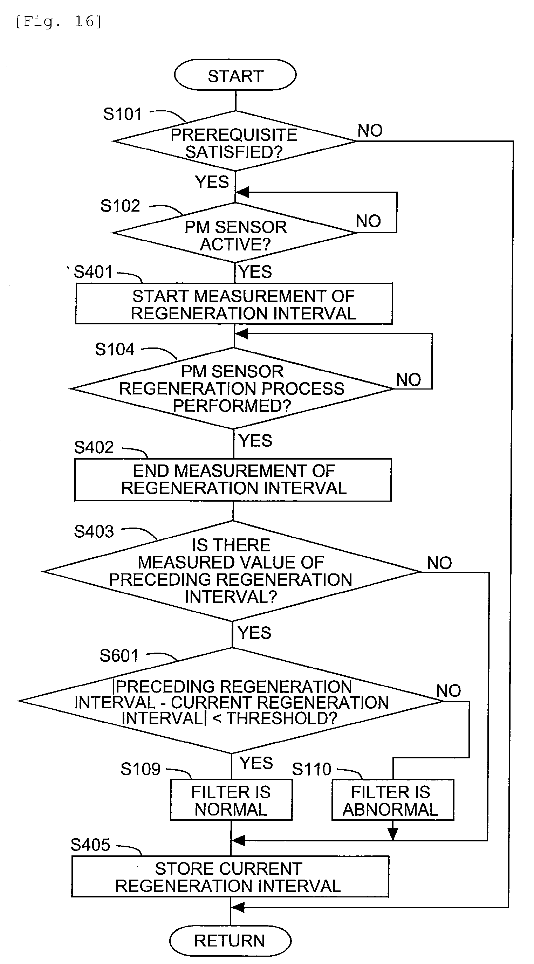

FIG. 16 is a flow chart showing a flow of abnormality detection of the filter 3 according to the present embodiment. The present routine is executed every prescribed time by the ECU 10. Moreover, steps in which same processes as those in the flow described earlier are performed will be denoted by same reference characters and a description thereof will be omitted.

In the present embodiment, when a positive determination is made in step S403, the present routine advances to step S601. In step S601, a determination is made on whether or not an absolute value of a value obtained by subtracting the currently measured regeneration interval from the precedingly stored regeneration interval is smaller than a threshold. The threshold is obtained in advance by an experiment, a simulation, or the like and stored in the ECU 10 as a lower limit value of an absolute value of a value obtained by subtracting the currently measured regeneration interval from the precedingly stored regeneration interval when the filter 3 is abnormal. Moreover, the threshold has a positive value. In the present step, a determination is made on whether or not an absolute value of an amount of change in the regeneration interval is smaller than a threshold.

When a positive determination is made in step S601, the present routine proceeds to step S109 and a determination is made that the filter 3 is normal. On the other hand, when a negative determination is made in step S601, the present routine proceeds to step S110 and a determination is made that the filter 3 is abnormal. Moreover, in the present embodiment, the ECU 10 that processes step S601 and subsequent steps corresponds to the determining unit according to the present invention.

As described above, according to the present embodiment, by comparing an amount of change in the regeneration interval with a threshold, an abnormality of the filter 3 can be determined with high accuracy. In addition, since an amount of PM that is deposited on the PM sensor 4 need not be accurately obtained, the influence of variations in the detection value of the PM sensor 4 can be reduced. Furthermore, even when the PM deposition amount on the filter 3 decreases, an abnormality of the filter 3 can be determined with high accuracy. Moreover, in the present embodiment, an abnormality of the filter 3 can be determined regardless of an increase or decrease of the PM deposition amount on the filter 3.

### [EXPLANATION OF REFERENCE NUMERALS]

- 1: internal combustion engine
- 2: exhaust passage
- 3: filter
- 4: PM sensor
- 5: temperature sensor
- 10: ECU
- 11: accelerator pedal
- 12: accelerator depression amount sensor
- 13: crank position sensor
- 14: differential pressure sensor

## Claims

1. A filter abnormality detection apparatus comprising:
a filter which is provided in an exhaust passage of an internal combustion engine and which collects particulate matter in exhaust gas; and
a PM sensor which detects an amount of particulate matter in the exhaust gas on a downstream side of the filter,
the filter abnormality detection apparatus further comprising:
a PM sensor regenerating unit which performs a PM sensor regeneration process that is a process of removing particulate matter from the PM sensor when the amount of particulate matter deposited on the PM sensor equals or exceeds a prescribed amount; and
a determining unit which determines that the filter is abnormal when a difference between an interval at which the PM sensor regeneration process is performed and a reference interval that is a reference of the interval at which the PM sensor regeneration process is performed is equal to or larger than a threshold.

2. The filter abnormality detection apparatus according to claim 1, wherein the determining unit twice measures an interval at which the PM sensor regeneration process is performed, adopts one of the intervals as the reference interval, and determines that the filter is abnormal when a difference between the other interval and the reference interval is equal to or larger than the threshold.

3. The filter abnormality detection apparatus according to claim 2, wherein in a case where an amount of NO₂ in exhaust gas flowing into the filter is larger than a prescribed amount, the determining unit determines that the filter is abnormal when a value obtained by subtracting, from the reference interval, the interval at which the PM sensor regeneration process is performed is equal to or smaller than a threshold that is a negative value.

4. The filter abnormality detection apparatus according to any one of claims 1 to 3, wherein the determining unit adopts a precedingly measured interval at which the PM sensor regeneration process is performed, as the reference interval.

5. The filter abnormality detection apparatus according to claim 1, wherein the determining unit adopts an interval at which the PM sensor regeneration process is performed when the filter is normal, as the reference interval.

6. The filter abnormality detection apparatus according to any one of claims 1 to 5, wherein the determining unit adopts a period from a time point when the PM sensor regeneration process is terminated to a time point when a next PM sensor regeneration process is started, as the interval at which the PM sensor regeneration process is performed.

7. The filter abnormality detection apparatus according to any one of claims 1 to 5, wherein the determining unit adopts a period from a time point when the PM sensor regeneration process is started to a time point when a next PM sensor regeneration process is started, as the interval at which the PM sensor regeneration process is performed.

8. The filter abnormality detection apparatus according to any one of claims 1 to 5, wherein the determining unit adopts a period from a time point when the PM sensor regeneration process is completed to a time point when a next PM sensor regeneration process is completed, as the interval at which the PM sensor regeneration process is performed.
